# EUROPEAN PATENT SPECIFICATION

(11) **EP 4 346 418 B1**
(45) Date of publication and mention of the grant of the patent: **02.04.2025**
(21) Application number: 22730526.5
(22) Date of filing: 26.05.2022
(51) Int. Cl.: A23C 3/033, A23L 2/46, A23L 3/00, G01F 1/00

(54) **PASTEURISATION APPARATUS IMPROVEMENTS**
VERBESSERUNGEN AN EINER PASTEURISIERUNGSVORRICHTUNG
AMÉLIORATIONS D?APPAREIL DE PASTEURISATION

(30) Priority: 01.06.2021 EP 21177207
(43) Date of publication of application: 10.04.2024
(73) Proprietor: Unison Engineering Services Limited, Limerick, V94 E3W2 (IE)
(72) Inventor: SHEEHAN, Paul, Limerick, V94 E3W2 (IE)
(74) Representative: Weldon O'Brien Ltd.
(86) International application number: PCT/EP2022/064382
(87) International publication number: WO 2022/253697

(56) References cited:
- WO-A2-02/37975
- GB-A- 2 363 852
- JP-B2- 5 027 166
- US-A- 2 546 891

## Description

### Introduction

The present invention relates to pasteurisation apparatus', especially to monitoring of dwell times for adequate treatment.

Our prior European Patent Application No. EP3740078A describes a pasteurisation apparatus, in which there is a holding tube and control components that ensure that milk has a sufficient dwell time at a certain temperature. GB2,363,852 (Bowling) describes a method and apparatus for determining the time taken for a fluid to flow through a length of conduit. US2,546,891 (Faust) describes an apparatus for timing the passage of a liquid.

The present invention is directed towards providing an improved pasteurisation apparatus.

### Summary

We describe a pasteurization apparatus comprising a line through a heater, a pump, a holding tube, a temperature sensor at or downstream of an outlet of the dwell tube, a controller, a first product sensor at or near an inlet of the holding tube, and a second product sensor at or near an outlet of the holding tube, wherein the controller is configured to perform a method comprising a dwell time test by:
pumping a liquid product through the heater and then through the holding tube at an elevated temperature for a target dwell time period,
detecting a first time stamp upon passage of the product at the start of the holding tube by way of sensing of the product by the first sensor,
detecting a second time stamp upon passage of the product at the end of the holding tube by way of sensing of the product by the second sensor, and
calculating a dwell time according to time difference between the time stamps;
and wherein the controller is configured to:
   perform the dwell time test without interruption between initial purging of the line with water and the start of pasteurizing the product, the sensing being used by the controller to differentiate between water and the product, and
   perform the dwell time test without interruption between completion of product pasteurizing and purging of the line with water at the end of pasteurizing the product, the sensing being used by the controller to differentiate between water and the product.

Preferably, at least one of the sensors is a conductivity sensor and the controller is configured to perform includes conductivity sensing. Preferably, the holding tube is at least partly in a spiral configuration. Preferably, the controller is configured to monitor temperature at the end of the holding tube at least, to verify the elevated temperature for the determined time.

Preferably, the sensors are conductivity sensors, and the controller is configured to recognize water by conductivity being in the range of 100 and 1,000 s/m. Preferably, the controller is configured to perform the dwell time test only when the flow rate in the line exceeds a threshold.

Preferably, the controller is configured to automatically perform the dwell time test at the start of every batch and the end of every batch. Preferably, the controller is configured to integrate the dwell time test with detection of product line purging data.

In various examples, the sensors include sensors for one or more of turbidity, pH, fats, and protein sensing.

Preferably, the controller is configured to store a calibration time duration for opening or closing of a valve for diverting liquid coming from the dwell tube to a diversion route according to whether a required temperature and dwell time has been achieved, to monitor operation of said valve, and to raise an alert if the operating time is excessively long. Preferably, the controller is configured to perform a pasteurization unit PU Value calculation in real time by determining a product dwell time and combining the dwell time with an elevated temperature value. Preferably, the controller is configured to relate a quantity of product with the PU value according to pump (13) output.

Preferably, the apparatus comprises a diversion valve for diversion of liquid to a recovery tank, and the controller is configured to divert waste liquid to said tank via said valve.

Preferably, the controller is configured to determine that a liquid flowing in the apparatus is waste on the basis of conductivity sensing of the liquid, a category of waste being determined if a conductivity value is between that for water and that for the product.

Preferably, the controller is configured to determine a transition to waste liquid immediately before a product batch and immediately after a product batch.

Preferably, the controller is configured to store a pre-set volume value for a flow path in the apparatus between a conductivity sensor (CS2) at which it detects a transition to waste liquid and the diversion valve, and to predict according to said volume value and the pump flow rate how long it will take for the waste liquid to reach the diversion valve, and to actuate the diversion valve at an estimated time for he waste liquid to reach the diversion valve to cause diversion of the waste liquid to the recovery tank.

We also describe a method of operation of a pasteurization apparatus of any example described herein, the method comprising the controller performing the steps of:
pumping a liquid product through the heater and then through the holding tube at an elevated temperature for a target dwell time period,
detecting a first time stamp upon passage of the product at the start of the holding tube by way of sensing of the product by the first sensor,
detecting a second time stamp upon passage of the product at the end of the holding tube by way of sensing of the product by the second sensor,
calculating a dwell time according to time difference between the time stamps, in which the controller:
   performs the dwell time test without interruption between initial purging of the line with water and the start of pasteurizing the product, the sensing being used by the controller to differentiate between water and the product, and
   performs the dwell time test without interruption between completion of product pasteurizing and purging of the line with water at the end of pasteurizing the product, the sensing being used by the controller to differentiate between water and the product.

We also describe a method of pasteurising a liquid product, the method being carried out by an apparatus comprising a line through a heater, a pump, a temperature sensor, a holding tube and a controller, the method comprising performing a dwell time test by pumping the product through the heater and then through the holding tube at an elevated temperature for a target dwell time period, the method including detecting a first time stamp upon passage of the product at the start of the holding tube by way of sensing by a sensor, detecting a second time stamp upon passage of the product at the end of the holding tube by a sensor, and calculating a dwell time according to time difference between the time stamps.

In some examples, the sensing includes conductivity sensing. In some examples, the holding tube is at least partly in a spiral configuration. In some examples, the method comprises monitoring temperature at the end of the holding tube at least to verify the elevated temperature for the determined time.

In some examples, the dwell time test is carried out without interruption between initial purging of the line with water and the start of pasteurizing the product, the sensors being used by the controller to differentiate between water and the product. In some examples, the dwell time test is carried out without interruption between completion of product pasteurizing and purging of the line with water at the end of pasteurizing the product, the sensors being used by the controller to differentiate between water and the product.

In some examples, the sensing is conductivity sensing, and the controller is configured to recognize water by conductivity being in the range of 100 and 1,000 s/m. In some examples, the controller carries out the dwell time test only when the flow rate in the line exceeds a threshold.

In some examples, the controller automatically carries out the dwell time test at the start of every batch and the end of every batch. In some examples, the controller integrates the dwell time test with detection of product line purging data. In some examples, the sensing includes one or more of turbidity, pH, fats, and protein sensing.

We also describe a pasteurization apparatus comprising a heater, a pump, a temperature sensor, a holding tube, a sensor at the start of the holding tube, a sensor at the end of the holding tube, and a controller, wherein the controller is configured to perform a dwell time test of a method of any example described herein.

### Detailed Description of the Invention

The invention will be more clearly understood from the following description of some embodiments thereof, given by way of example only with reference to the accompanying drawings in which:

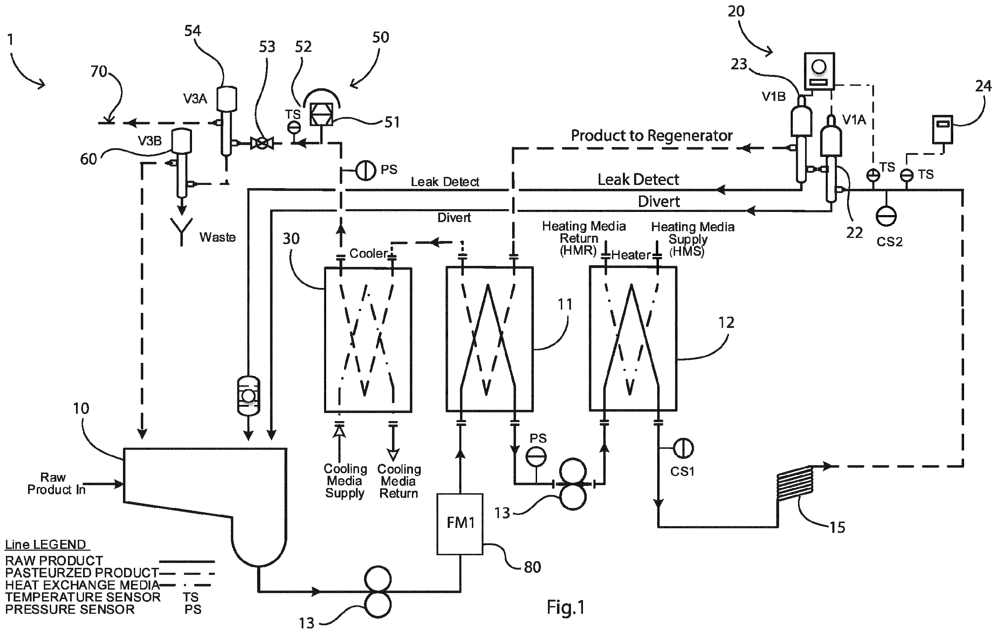

Fig. 1 is a flow diagram illustrating a pasteurization apparatus of the invention and its operation.

Referring to Fig. 1, a pasteurization apparatus 1 of the invention comprises a constant level tank 10 which receives raw milk from a supplier. The stages of the apparatus 1 are as follows in order of flow through:
11. Regenerator heat exchanger to pre-heat the raw product, such as raw milk, by treated and pasteurized milk giving up some of its heat.
12. A heater heat exchanger for elevating temperature of the raw milk to a desired target level for pasteurization, by transfer of heat from a heating medium received on a heat media supply HMS and return HMR. The heat transfer medium is in this case water.
15. A holding tube, in this case configured with a spiral. The holding tube starts at the outlet of the pasteurizing section (hot water section 12) and finishes at a diversion valve V1A. The holding tube diameter is in the range of 10mm to 200mm and the length is in the range of 0.1m to 500m in length, depending on the flow rate of the pasteurizer and the total holding time required for the product that is being pasteurized. This holding time length varies from pasteurizer to pasteurizer depending on the type of product being pasteurized. For dairy products the target dwell time is from 1 second to 5,000 seconds. For beer this is calculated on a PU Value (pasteurizer units), which is a calculation between the desired pasteurizing and the dwell time required for the type of beer being pasteurized.
The milk, or other product, is pumped through the heater 12 and the holding tube 15 by a pump 13 which is controlled by a controller 20 with use of pressure sensors PS and configured parameters to achieve a dwell time of at least 15 seconds at the elevated temperature.
CS1 and CS2. Conductivity sensors, one at each end of the holding tube 15. The sensors that are used for this test are IFM LDL 100^{™} and LDL 200^{™}, but there are many different types of conductivity sensors that can also be used for this test. They are mounted to the tube by a sanitary Tri Clamp fixture. Both of the sensors CS1 and CS2 are positioned in the holding tube 15 by a sanitary mounting fixture, both sensors protruding into the holding tube to detect the difference between the product and water as it passes both sensors. The sensor CS1 is mounted as near as possible to where the product enters the holding tube 15 and the sensor CS2 is mounted as near as possible to where the product exits the holding tube 15, to accurately calculate the total time that the product is in the complete holding tube. They detect conductivity across the full diameter of the tube. The sensors CS1 and CS2 are positioned in the holding tube to protrude into the product to easily detect the difference between water and the product.
20. Controller with a safety thermal limit recorder linked to the conductivity sensors CS1 and CS2, and also to a digital reference thermometer TS 24 at the outlet of the holding tube 15.
22, 23. Flow diversion valves for onward routing of the heated milk according to results of integrity checking of the dwell test. The main flow from the first valve 22 (V1A) is to the second valve 23 (V1B), the rejection alternative being to the raw product tank 10. The main flow from the second valve 23 is to the regenerator 11, the rejection alternative being to the tank 10. The valve 23 is a fail safe for the first valve 22, providing for a scenario in which the first valve seal leaks.
30. Heat exchanger cooler, to further cool pasteurized milk after it has already given up some of its heat in the regenerator 11.
50. Product outlet controller. This delivers the final product (pasteurized milk) to a coupler 70 from the apparatus 1. It includes a vacuum breaker 51 which is at a level of at least 30cm above the tank 10, a temperature sensor 52, a back-pressure valve 53, a final valve 54 (V3A) for delivery of the final product, and a waste return valve 60 (V3B) for routing of waste product back to the un-treated supply milk tank 10. The outlet 50 components 51-54 operate in conjunction with each other for monitoring pressure and the operation of the pasteurizer and provide over-pressure detection and control.

In use, the apparatus 1 is operated by circulating water at the start of production. When this water reaches pasteurization temperature by heating in the heater 12 the water is sent to drain via the valves V3A and V3B. The pump 13 is then operated to pump milk into the apparatus 1, purging the water from it until all of the water is purged from the pasteuriser and only milk remains. The pump 13 is a lobe-type pump that is used for the purging. There are two pumps 13, and either or both may be used. A different type of pump, such as a centrifugal pump, may be used. During this purging process a holding time test is simultaneously carried out at the start and finish of pasteurizing. This is performed by monitoring readings from the conductivity meters CS1 and CS2, located before and after the holding tube 15.

The controller 20 is configured with the conductivity of the water being approximately 800 Siemens per meter (s/m) (this can vary between 100 and 1,000 s/m depending on the water supply) and with the conductivity of milk, say 4,500 s/m (this can also slightly vary). The controller 20 therefore can calculate the holding time of the milk in the holding tube 15 during the purging process at the start and finish of pasteurising.

For the test to commence, the pasteurizer is started and run with water as described above. When it reaches the required pasteurization temperature and flow rate of 10,000 L/h (litres per hour). Milk enters the pasteuriser via an automatic valve (it can enter the pasteurizer in other ways for example via pump gravity feed from a tank). During purging both of the conductivity sensors CS1 and CS2 and a flow meter are monitored. If a setting of say 4,000 s/m is set as the triggering signal for both the conductivity sensors, then this will detect the arrival of the milk at the start conductivity sensor CS1, starting the clock; and when the conductivity sensor CS2 at the end of the holding tube detects the milk it stops the clock, calculating the holding time test at the flow rate monitored.

This test can also be run at the end of production when water is used to purge the milk from the pasteuriser. Instead of milk triggering the test, the water is used but the procedure is the same, only the triggering settings are different for the milk and the water.

The testing process involves the following controller operations:
The flow rate is determined by way of a flow meter FM1, 80, positioned between the balance tank 10 and the start of the regenerator 11. The flowmeter may alternatively be positioned in other positions suitable to the process requirement sin the line.
The conductivity sensor CS1 at the start of the holding tube 15 detects the changeover from water to milk (using a configured threshold of for example 2,500 s/m).
This triggers the clock to start the time calculation.
When the sensor CS2 at the end of the holding tube 15 also detects this changeover from water to milk the clock is stopped. This provides the time duration in addition to the flow rate data, for example 25 seconds at a flow rate of 20,000 L/h. This time and flow rate can vary significantly depending on the size of the holding tube, 5 to 5000 seconds (this is determined by the length of the holding tube) and pasteuriser's flow rate, for example 100 to 100,000 L/h.
At the end of pasteurizing the opposite occurs, the changeover being from milk to water.

The test will log data including the trigger time between both sensors CS1 and CS2 and the flowrate on the flow meter during this time.

Such an automatic holding time (or "dwell time") test can be carried out as described daily at the start and finish of production. It is very advantageous that it is part of the integral procedures at the start and end of production. By monitoring the purging process with the two conductivity sensors it is possible to also recover the purging water that is normally sent to drain. It eliminates the need for specialist personnel such as outside contractors to carry out dwell time tests.

### Operational Test of the Diversion Valves 22 and 23.

The normal position for the diversion valves V1A and V1B is at the end of the holding tube 15, however, in other cases they (or a single valve performing this function) may be positioned at the cold product outlet (downstream of the stage 30).

After holding the product in the holding tube 15, a temperature sensor TS detects if the product is at the correct pasteurisation temperature. If so, the diversion valves V1A/V1B activate, allowing product to enter the pasteurised product section 11 of the PHE for sending the product via the stage 30 to the coupler 70.

The diversion valves V1A/V1B prevent raw product from entering the pasteurised section 11. The default position for them is normally open so that all product is returned to the balance tank 10 or the product supply pipe if this valve is not operating correctly. Such incorrect operation may be due to lack of air, electricity, other mechanical issues or has not achieving the correct pasteurisation temperature as set on the pasteurising temperature sensor TS/24.This sensor includes a digital reference thermometer (DRT) 24.

On commissioning or a subsequent setup of the apparatus 1, two proximity switches are installed on the valves V1A/V1B to detect the correct open and closed positions for them. These proximity switches record when the valves turn to the open and closed positions and may be built in at valve manufacture. Then a test is carried out to check the time it takes for this valve to travel between its normally open and closed positions. This is indicated by the proximity switches opening and closing. This time is calculated by the PLC controller 20 or another time-detecting apparatus. Then this time is calibrated into the controller 20 to monitor the correct operational time for this valve. This valve is set to operate with a maximum time error setting of, in one example, 20%. Therefore, if this valve operates outside the set time allowed an alarm is given to check this valve as it may be faulty.

On start-up, with the pasteuriser running on water, the water begins to heat up. When it reaches the pre-set pasteurisation temperature, after a time delay the diversion valve V1A/V1B will activate to send the "pasteurised" water into the pasteurised section of the pasteuriser. Before any product is allowed to enter the balance tank 10 to commence production, the heating supply to the pasteuriser is stopped and the pasteuriser begins to fall in temperature. When this temperature falls below the pre-set pasteurisation temperature, the valves V1A/V1B will deactivate, returning water to the balance tank. This valve activation and deactivation is recorded on the PLC 20 to ensure that this valve is operating correctly within the allocated operational time allowed and at the correct temperature.

The above valve time check may be also installed into other single or multiple valve manifolds to detect if a valve is operating correctly/incorrectly, outside the allocated time set for correct operation of this valve.

### Real Time PU Value Calculation

For some products, especially alcoholic beverages such as beer, an important parameter is "pasteurization unit" or "PU" value, which is a measure of the heat received by the product during pasteurization. The controller 20 is programmed to dynamically calculate a PU value by initially determining as described above the dwell time using the conductivity sensors CS1 and CS2 and combining the dwell time with the elevated temperature. This calculation provides the base PU value of the product with a value of one being at a temperature of at least 60° for one minute, in one example. So, it is at this elevated temperature for 2 minutes the PU value is 2. The value is related to quantity of product by the controller 20 using the flow rate according to pump 13 output to relate the PU value to kg of product.

### Waste Liquid Processing

In one example the outlet coupler 20 includes a diversion valve for diversion of liquid to a recovery tank. Immediately before and after product batches there is a time period during which the liquid is neither product nor water but is rather a waste liquid such as milky water. This waste liquid cannot be delivered to the drain and nor is it useful, and hence it must be treated. The system 1 accurately controls the amount to be treated by the controller 20 determining the transition to waste liquid using the conductivity sensors CS1 and CS2. Also, the controller 20 stores a pre-set volume for the line between the second sensor CS2 and the outlet coupler 70, say 20 litres. When the controller 20 automatically senses a transition from water to product or vice versa it predicts according to the stored volume value and the pump flow rate how long it will take for the waste liquid to reach the output coupler 70. At the estimated time (with a pre-set safety margin) the diversion valve at the outlet 70 is actuated to cause diversion of the waste liquid to the recovery tank for treatment before disposal. The treatment may for example include spray drying, or an ultra-filtration (UF) or a reverse osmosis (RO) plant to recover the protein.

In another example the controller performs this processing according to a third conductivity sensor at the outlet 70, in which case the diversion is immediate without processing of estimate time to the outlet 70.

Components of embodiments can be employed in other embodiments in a manner as would be understood by a person of ordinary skill in the art. The invention is not limited to the embodiments described but may be varied in construction and detail. The product may be other than milk, for example beer, wine, or fruit juice.

This test can also be carried out using sensors other than conductivity sensors at the start and finish of the holding tube. While this is not as effective as conductivity sensing as described above, the system would have the benefit of the in-line dwell time testing achieved before and after a product process. Such sensors include turbidity sensors to detect a change of colour, pH sensors, fats sensors, protein sensors, for example. These liquid parameters are very different between water and products being pasteurized such as milk.

## Claims

1. A pasteurization apparatus (1) comprising a line through a heater (12), a pump (13), a holding tube (15), a temperature sensor (24) at or downstream of an outlet of the dwell tube, a controller (20), a first product sensor (CS1) at or near an inlet of the holding tube, and a second product sensor (CS2) at or near an outlet of the holding tube, wherein the controller (20) is configured to perform a method comprising a dwell time test by:
pumping a liquid product through the heater (12) and then through the holding tube (15) at an elevated temperature for a target dwell time period,
detecting a first time stamp upon passage of the product at the start of the holding tube by way of sensing of the product by the first sensor (CS1),
detecting a second time stamp upon passage of the product at the end of the holding tube by way of sensing of the product by the second sensor (CS2), and
calculating a dwell time according to time difference between the time stamps;
**characterized in that**, the controller (20) is configured to:
perform the dwell time test without interruption between initial purging of the line with water and the start of pasteurizing the product, the sensing being used by the controller to differentiate between water and the product, and
perform the dwell time test without interruption between completion of product pasteurizing and purging of the line with water at the end of pasteurizing the product, the sensing being used by the controller to differentiate between water and the product.

2. An apparatus as claimed in claim 1, wherein at least one of the sensors is a conductivity sensor (CS1, CS2) and the controller is configured to perform includes conductivity sensing.

3. An apparatus as claimed in claims 1 or 2, wherein the holding tube (15) is at least partly in a spiral configuration.

4. An apparatus as claimed in claims 1 or 2 or 3, wherein the controller is configured to monitor temperature (TS) at the end of the holding tube at least, to verify the elevated temperature for the determined time.

5. An apparatus as claimed in any preceding claim, wherein the sensors are conductivity sensors (CS1, CS2), and the controller is configured to recognize water by conductivity being in the range of 100 and 1,000 s/m.

6. An apparatus as claimed in any preceding claim, wherein the controller is configured to perform the dwell time test only when the flow rate in the line exceeds a threshold.

7. An apparatus as claimed in claims 4 or 5 or 6, wherein the controller is configured to automatically perform the dwell time test at the start of every batch and the end of every batch.

8. An apparatus as claimed in any of claims 4 to 7, wherein the controller is configured to integrate the dwell time test with detection of product line purging data.

9. An apparatus of any preceding claim, wherein the sensors include sensors for one or more of turbidity, pH, fats, and protein sensing.

10. An apparatus as claimed in any preceding claim, wherein the controller is configured to store a calibration time duration for opening or closing of a valve (V1A/V1B) for diverting liquid coming from the dwell tube (15) to a diversion route according to whether a required temperature and dwell time has been achieved, to monitor operation of said valve, and to raise an alert if the operating time is excessively long.

11. An apparatus as claimed in any preceding claim, wherein the controller is configured to perform a pasteurization unit PU Value calculation in real time by determining a product dwell time and combining the dwell time with an elevated temperature value, and optionally the controller is configured to relate a quantity of product with the PU value according to pump (13) output.

12. An apparatus as claimed in any preceding claim, wherein the apparatus comprises a diversion valve for diversion of liquid to a recovery tank, and the controller (20) is configured to divert waste liquid to said tank via said valve; and optionally the controller is configured to determine that a liquid flowing in the apparatus is waste on the basis of conductivity sensing of the liquid, a category of waste being determined if a conductivity value is between that for water and that for the product.

13. An apparatus as claimed in claim 12, wherein the controller is configured to determine a transition to waste liquid immediately before a product batch and immediately after a product batch.

14. An apparatus as claimed in claim 13, wherein the controller is configured to store a pre-set volume value for a flow path in the apparatus between a conductivity sensor (CS2) at which it detects a transition to waste liquid and the diversion valve, and to predict according to said volume value and the pump flow rate how long it will take for the waste liquid to reach the diversion valve, and to actuate the diversion valve at an estimated time for he waste liquid to reach the diversion valve to cause diversion of the waste liquid to the recovery tank.

15. A method of operation of a pasteurization apparatus (1) of any preceding claim, the method comprising the controller performing the steps of:
pumping a liquid product through the heater (12) and then through the holding tube (15) at an elevated temperature for a target dwell time period,
detecting a first time stamp upon passage of the product at the start of the holding tube by way of sensing of the product by the first sensor (CS1),
detecting a second time stamp upon passage of the product at the end of the holding tube by way of sensing of the product by the second sensor (CS2),
calculating a dwell time according to time difference between the time stamps, **characterized in that** the controller:
performs the dwell time test without interruption between initial purging of the line with water and the start of pasteurizing the product, the sensing being used by the controller to differentiate between water and the product, and
performs the dwell time test without interruption between completion of product pasteurizing and purging of the line with water at the end of pasteurizing the product, the sensing being used by the controller to differentiate between water and the product.

## Patentansprüche

1. Pasteurisierungsvorrichtung (1), umfassend eine Leitung durch eine Heizvorrichtung (12), eine Pumpe (13), ein Halterohr (15), einen Temperatursensor (24) an oder stromabwärts von einem Auslass des Verweilrohrs, eine Steuerung (20), einen ersten Produktsensor (CS1) an oder nahe einem Einlass des Halterohrs und einen zweiten Produktsensor (CS2) an oder nahe einem Auslass des Halterohrs, wobei die Steuerung (20) dazu konfiguriert ist, ein eine Verweilzeitprüfung umfassendes Verfahren durch Folgendes auszuführen:
Pumpen eines flüssigen Produkts durch die Heizvorrichtung (12) und dann durch das Halterohr (15) bei einer erhöhten Temperatur für einen Sollverweilzeitraum,
Detektieren eines ersten Zeitstempels beim Durchlauf des Produkts am Anfang des Halterohrs mittels Erfassen des Produkts durch den ersten Sensor (CS1),
Detektieren eines zweiten Zeitstempels beim Durchlauf des Produkts am Ende des Halterohrs mittels Erfassen des Produkts durch den zweiten Sensor (CS2), und
Berechnen einer Verweilzeit gemäß einer Zeitdifferenz zwischen den Zeitstempeln;
**dadurch gekennzeichnet, dass** die Steuerung (20) dazu konfiguriert ist:
die Verweilzeitprüfung ohne Unterbrechung zwischen anfänglichem Spülen der Leitung mit Wasser und dem Beginn der Pasteurisierung des Produkts auszuführen, wobei die Erfassung von der Steuerung verwendet wird, um zwischen Wasser und dem Produkt zu unterscheiden, und
die Verweilzeitprüfung ohne Unterbrechung zwischen dem Abschließen der Produktpasteurisierung und dem Spülen der Leitung mit Wasser am Ende der Pasteurisierung des Produkts auszuführen, wobei die Erfassung von der Steuerung verwendet wird, um zwischen Wasser und dem Produkt zu unterscheiden.

2. Vorrichtung nach Anspruch 1, wobei mindestens einer der Sensoren ein Leitfähigkeitssensor (CS1, CS2) ist und die Steuerung dazu konfiguriert ist, Leitfähigkeitserfassung auszuführen.

3. Vorrichtung nach Anspruch 1 oder 2, wobei das Halterohr (15) mindestens teilweise in einer Spiralkonfiguration ist.

4. Vorrichtung nach einem der Ansprüche 1 oder 2 oder 3, wobei die Steuerung dazu konfiguriert ist, die Temperatur (TS) mindestens am Ende des Halterohrs zu überwachen, um die erhöhte Temperatur für die bestimmte Zeit zu überprüfen.

5. Vorrichtung nach einem der vorangehenden Ansprüche, wobei die Sensoren Leitfähigkeitssensoren (CS1, CS2) sind und die Steuerung dazu konfiguriert ist, Wasser dadurch zu erkennen, dass die Leitfähigkeit im Bereich von 100 und 1000 s/m liegt.

6. Vorrichtung nach einem der vorangehenden Ansprüche, wobei die Steuerung dazu konfiguriert ist, die Verweilzeitprüfung nur dann auszuführen, wenn der Volumenstrom in der Leitung über einem Schwellenwert liegt.

7. Vorrichtung nach Anspruch 4 oder 5 oder 6, wobei die Steuerung dazu konfiguriert ist, die Verweilzeitprüfung automatisch am Anfang jeder Charge und am Ende jeder Charge auszuführen.

8. Vorrichtung nach einem der Ansprüche 4 bis 7, wobei die Steuerung dazu konfiguriert ist, die Verweilzeitprüfung mit der Detektion von Produktleitungsspüldaten zu integrieren.

9. Vorrichtung nach einem der vorangehenden Ansprüche, wobei die Sensoren Sensoren zu einem oder mehreren von Trübungs-, pH-, Fett- und Proteinerfassung umfassen.

10. Vorrichtung nach einem der vorangehenden Ansprüche, wobei die Steuerung dazu konfiguriert ist, eine Kalibrierungszeitdauer zum Öffnen oder Schließen eines Ventils (V1A1V1B) zum Umleiten von von dem Verweilrohr (15) kommender Flüssigkeit zu einer Umleitungsstrecke je nachdem, ob eine erforderliche Temperatur und Verweilzeit erreicht wurden, zu speichern, den Betrieb des Ventils zu überwachen und einen Alarm auszulösen, wenn die Betriebszeit übermäßig lang ist.

11. Vorrichtung nach einem der vorangehenden Ansprüche, wobei die Steuerung dazu konfiguriert ist, eine Berechnung eines Pasteurisierungeinheits(PU)-Werts in Echtzeit durch Bestimmen einer Produktverweilzeit und Kombinieren der Verweilzeit mit einem erhöhten Temperaturwert auszuführen, und wobei optional die Steuerung dazu konfiguriert ist, eine Produktmenge gemäß der Pumpen(13)-Leistung mit dem PU-Wert in Beziehung zu setzen.

12. Vorrichtung nach einem der vorangehenden Ansprüche, wobei die Vorrichtung ein Umleitungsventil zum Umleiten einer Flüssigkeit zu einem Rückgewinnungsbehälter umfasst und die Steuerung (20) dazu konfiguriert ist, Abfallflüssigkeit über das Ventil zu dem Behälter umzuleiten; und wobei optional die Steuerung dazu konfiguriert ist, auf der Basis von Leitfähigkeitserfassung der Flüssigkeit zu bestimmen, dass eine in der Vorrichtung fließende Flüssigkeit Abfall ist, wobei eine Abfallkategorie bestimmt wird, wenn ein Leitfähigkeitswert zwischen demjenigen für Wasser und demjenigen für das Produkt liegt.

13. Vorrichtung nach Anspruch 12, wobei die Steuerung dazu konfiguriert ist, einen Wechsel zu Abfallflüssigkeit unmittelbar vor einer Produktcharge und unmittelbar nach einer Produktcharge zu bestimmen.

14. Vorrichtung nach Anspruch 13, wobei die Steuerung dazu konfiguriert ist, einen voreingestellten Volumenwert für einen Strömungspfad in der Vorrichtung zwischen einem Leitfähigkeitssensor (CS2), an dem sie einen Wechsel zu Abfallflüssigkeit detektiert, und dem Umleitungsventil zu speichern, und gemäß dem Volumenwert und dem Pumpenvolumenstrom vorherzusagen, wie lange es dauern wird, bis die Abfallflüssigkeit das Umleitungsventil erreicht, und das Umleitungsventil zu einer geschätzten Zeit für das Erreichen des Umleitungsventils durch die Abfallflüssigkeit zu betätigen, um eine Umleitung der Abfallflüssigkeit zu dem Rückgewinnungsbehälter zu bewirken.

15. Verfahren zum Betreiben einer Pasteurisierungsvorrichtung (1) nach einem der vorangehenden Ansprüche, wobei das Verfahren umfasst, dass die Steuerung die folgenden Schritte ausführt:
Pumpen eines flüssigen Produkts durch die Heizvorrichtung (12) und dann durch das Halterohr (15) bei einer erhöhten Temperatur für einen Sollverweilzeitraum,
Detektieren eines ersten Zeitstempels beim Durchlauf des Produkts am Anfang des Halterohrs mittels Erfassen des Produkts durch den ersten Sensor (CS1),
Detektieren eines zweiten Zeitstempels beim Durchlauf des Produkts am Ende des Halterohrs mittels Erfassen des Produkts durch den zweiten Sensor (CS2),
Berechnen einer Verweilzeit gemäß einer Zeitdifferenz zwischen den Zeitstempeln,
**dadurch gekennzeichnet, dass** die Steuerung:
die Verweilzeitprüfung ohne Unterbrechung zwischen anfänglichem Spülen der Leitung mit Wasser und dem Beginn der Pasteurisierung des Produkts ausführt, wobei die Erfassung von der Steuerung verwendet wird, um zwischen Wasser und dem Produkt zu unterscheiden, und
die Verweilzeitprüfung ohne Unterbrechung zwischen dem Abschließen der Produktpasteurisierung und dem Spülen der Leitung mit Wasser am Ende der Pasteurisierung des Produkts ausführt, wobei die Erfassung von der Steuerung verwendet wird, um zwischen Wasser und dem Produkt zu unterscheiden.

## Revendications

1. Appareil de pasteurisation (1) comprenant une conduite à travers un réchauffeur (12), une pompe (13), un tube de retenue (15), un capteur de température (24) au niveau d'une sortie du tube de séjour ou en aval de celle-ci, un contrôleur (20), un premier capteur de produit (CS1) au niveau d'une entrée du tube de retenue ou à proximité de celle-ci, et un second capteur de produit (CS2) au niveau d'une sortie du tube de retenue ou à proximité de celle-ci, dans lequel le contrôleur (20) est configuré pour réaliser un procédé comprenant un test de temps de séjour par :
le pompage d'un produit liquide à travers le réchauffeur (12) puis à travers le tube de retenue (15) à une température élevée pendant une période de temps de séjour cible,
la détection d'un premier horodatage lors du passage du produit au début du tube de retenue par détection du produit par le premier capteur (CS1),
la détection d'un second horodatage lors du passage du produit à la fin du tube de retenue par la détection du produit par le second capteur (CS2), et
le calcul d'un temps de séjour en fonction de la différence de temps entre les horodatages ;
**caractérisé en ce que** le contrôleur (20) est configuré pour :
réaliser le test de temps de séjour sans interruption entre une purge initiale de la conduite avec de l'eau et le début de la pasteurisation du produit, la détection servant au contrôleur pour différencier entre l'eau et le produit, et
réaliser le test de temps de séjour sans interruption entre la fin de la pasteurisation du produit et la purge de la conduite avec de l'eau à la fin de la pasteurisation du produit, la détection servant au contrôleur pour différencier entre l'eau et le produit.

2. Appareil selon la revendication 1, dans lequel au moins un des capteurs est un capteur de conductivité (CS1, CS2) et le contrôleur est configuré pour réaliser une détection de conductivité.

3. Appareil selon les revendications 1 ou 2, dans lequel le tube de retenue (15) a au moins partiellement une configuration en spirale.

4. Appareil selon les revendications 1 ou 2 ou 3, dans lequel le contrôleur est configuré pour surveiller la température (TS) à la fin du tube de retenue au moins, afin de vérifier la température élevée pendant le temps déterminé.

5. Appareil selon l'une quelconque des revendications précédentes, dans lequel les capteurs sont des capteurs de conductivité (CS1, CS2), et le contrôleur est configuré pour reconnaître l'eau par une conductivité comprise dans une plage de 100 et 1000 s/m.

6. Appareil selon l'une quelconque des revendications précédentes, dans lequel le contrôleur est configuré pour réaliser le test de temps de séjour uniquement lorsque le débit dans la conduite dépasse un seuil.

7. Appareil selon les revendications 4 ou 5 ou 6, dans lequel le contrôleur est configuré pour réaliser automatiquement le test de temps de séjour au début et à la fin de chaque lot.

8. Appareil selon l'une quelconque des revendications 4 à 7, dans lequel le contrôleur est configuré pour intégrer le test de temps de séjour avec la détection de données de purge de conduite de produit.

9. Appareil selon l'une quelconque des revendications précédentes, dans lequel les capteurs comportent des capteurs pour la détection d'un ou de plusieurs éléments parmi la turbidité, le pH, les graisses et les protéines.

10. Appareil selon l'une quelconque des revendications précédentes, dans lequel le contrôleur est configuré pour stocker une durée de temps d'étalonnage pour l'ouverture ou la fermeture d'une vanne (V1A/V1B) servant à dévier de liquide provenant du tube de séjour (15) vers une voie de déviation selon qu'une température et un temps de séjour requis ont été atteints ou non, surveiller le fonctionnement de ladite vanne, et déclencher une alerte si le temps de fonctionnement est excessivement long.

11. Appareil selon l'une quelconque des revendications précédentes, dans lequel le contrôleur est configuré pour réaliser un calcul de valeur d'unité de pasteurisation PU en temps réel en déterminant un temps de séjour de produit et combinant le temps de séjour à une valeur de température élevée, et éventuellement le contrôleur est configuré pour associer une quantité de produit à la valeur de PU en fonction de la sortie de la pompe (13).

12. Appareil selon l'une quelconque des revendications précédentes, l'appareil comprenant une vanne de déviation pour la déviation de liquide vers un réservoir de récupération, et le contrôleur (20) est configuré pour dévier un liquide de déchet vers ledit réservoir via ladite vanne ; et, éventuellement, le contrôleur est configuré pour déterminer qu'un liquide s'écoulant dans l'appareil est un déchet d'après la détection de conductivité du liquide, une catégorie de déchet étant déterminée si une valeur de conductivité est comprise entre celle de l'eau et celle du produit.

13. Appareil selon la revendication 12, dans lequel le contrôleur est configuré pour déterminer une transition en un liquide de déchet immédiatement avant un lot de produit et immédiatement après un lot de produit.

14. Appareil selon la revendication 13, dans lequel le contrôleur est configuré pour stocker une valeur de volume prédéfinie pour une voie d'écoulement dans l'appareil entre un capteur de conductivité (CS2) au niveau duquel il détecte une transition en un liquide de déchet et la vanne de déviation, et pour prédire en fonction de ladite valeur de volume et du débit de la pompe combien de temps il faudra au liquide de déchet pour atteindre la vanne de déviation, et actionner la vanne de déviation à un temps estimé auquel le liquide de déchet atteindra la vanne de déviation afin de provoquer la déviation du liquide de déchet vers le réservoir de récupération.

15. Procédé de fonctionnement d'un appareil de pasteurisation (1) selon l'une quelconque des revendications précédentes, le procédé comprenant la réalisation par le contrôleur des étapes suivantes :
le pompage d'un produit liquide à travers le réchauffeur (12) puis à travers le tube de retenue (15) à une température élevée pendant une période de temps de séjour cible,
la détection d'un premier horodatage lors du passage du produit au début du tube de retenue par détection du produit par le premier capteur (CS1),
la détection d'un second horodatage lors du passage du produit à la fin du tube de retenue par la détection du produit par le second capteur (CS2), et
le calcul d'un temps de séjour en fonction de la différence de temps entre les horodatages ;
**caractérisé en ce que** le contrôleur :
réalise le test de temps de séjour sans interruption entre une purge initiale de la conduite avec de l'eau et le début de la pasteurisation du produit, la détection servant au contrôleur pour différencier entre l'eau et le produit, et
réalise le test de temps de séjour sans interruption entre la fin de la pasteurisation du produit et la purge de la conduite avec de l'eau à la fin de la pasteurisation du produit, la détection servant au contrôleur pour différencier entre l'eau et le produit.
